# EUROPEAN PATENT APPLICATION

(11) **EP 4 057 283 A2**
(43) Date of publication of application: **14.09.2022**
(21) Application number: 22185956.4
(22) Date of filing: 20.07.2022
(51) Int. Cl.: G10L 25/51, G10L 25/30, G06N 3/04, G06N 3/08

(54) **METHOD FOR DETECTING VOICE, METHOD FOR TRAINING, APPARATUSES AND SMART SPEAKER**

(30) Priority: 16.12.2021 CN 202111547589
(71) Applicant: BEIJING BAIDU NETCOM SCIENCE TECHNOLOGY CO., LTD., No. 10 Shangdi 10th Street Haidian District Beijing 100085 (CN)
(72) Inventor: LI, Boyu, Beijing, 100085 (CN)
(74) Representative: Richly & Ritschel Patentanwälte PartG mbB

(57) **Abstract**

A method for detecting a voice, a method for training, apparatuses and an electronic device. An implementation of the method includes: during performing voice detection, obtaining a first feature vector corresponding to the to-be-detected voice by a voice encoding model in the confidence detection model, and obtaining a second feature vector corresponding to a to-be-detected text corresponding to the to-be-detected voice by a text encoding model in the confidence detection model; then processing the first feature vector and the second feature vector by a decoding model in the confidence detection model, to obtain a target feature vector; and performing classification processing on the target feature vector by a classification model in the confidence detection model.

## Description

### TECHNICAL FIELD

The present disclosure relates to the technical field of data processing, in particular to the technical field of artificial intelligence such as voice interaction and voice detection, and more particular to a method for detecting a voice, a method for training, apparatuses and a smart speaker.

### BACKGROUND

For artificial intelligence (AI) voice assistants, such as smart speakers, in a full-duplex mode, an acquired voice needs to be detected. An accurate response may only be made if a detection result indicates that the voice is a human-machine interaction voice.

In the prior art, when detecting a voice, the voice may be detected by using a confidence detection model. The confidence detection model includes a transformer encoder and a classifier, a feature vector of the voice may be extracted by using a transformer network model, and the extracted feature vector is input into the classifier, then a voice detection result may be obtained by using the classifier.

However, using the existing solution may result in poor accuracy of voice detection results.

### SUMMARY

Embodiments of the present disclosure provide a method for detecting a voice, a method for training, apparatuses and a smart speaker, which improve an accuracy of voice detection results when performing voice detection.

According to a first aspect, a method for detecting a voice is provided. The method includes: inputting a to-be-detected voice into a confidence detection model, obtaining a first feature vector corresponding to the to-be-detected voice by a voice encoding model in the confidence detection model, and obtaining a second feature vector corresponding to a to-be-detected text corresponding to the to-be-detected voice by a text encoding model in the confidence detection model; processing, by a decoding model in the confidence detection model, the first feature vector and the second feature vector to obtain a target feature vector; and performing, by a classification model in the confidence detection model, classification processing on the target feature vector to obtain a detection result corresponding to the to-be-detected voice; wherein the detection result comprises human-machine interaction voice or non-human-machine interaction voice.

According to a second aspect, a method for training a confidence detection model is provided. The method includes: inputting each voice sample of a plurality of voice samples into an initial confidence detection model, obtaining a first feature vector corresponding to the each voice sample by an initial voice encoding model in the initial confidence detection model, and obtaining a second feature vector corresponding to a text corresponding to the each voice sample by an initial text encoding model in the initial confidence detection model; processing, by an initial decoding model in the initial confidence detection model, the first feature vector and the second feature vector corresponding to the each voice sample to obtain target feature vector corresponding to the each voice sample; performing, by an initial classification model in the initial confidence detection model, classification processing on the target feature vector corresponding to the each voice sample to obtain a detection result corresponding to the each voice sample; wherein the detection result comprises a human-machine interaction voice or a non-human-machine interaction voice; and updating network parameters of the initial confidence detection model, based on the detection result corresponding to the each voice sample and label information corresponding to the each voice sample.

According to a third aspect, an apparatus for detecting a voice is provided. The apparatus includes means for carrying out the method for detecting a voice according to the first aspect. .

According to a fourth aspect, an apparatus for training a confidence detection model is provided. The apparatus includes means for carrying out the method for detecting a voice according to the second aspect.

According to a fifth aspect, a non-transitory computer readable storage medium is provided. The non-transitory computer readable storage medium stores computer instructions, where, the computer instructions, when executed by a computer, cause the computer to perform the method for detecting a voice according to the first aspect, or cause the at least one processor to perform the method for training a confidence detection model according to the second aspect.

According to a sixth aspect, a computer program product is provided. The computer program product comprises a computer program, the computer program, when executed by a processor, causes the processor to implement the method for detecting a voice according to the first aspect, or cause the at least one processor to perform the method for training a confidence detection model according to the second aspect.

According an seventh aspect, a smart speaker is provided. The smart speaker comprises at least one processor; and a memory communicatively connected to the at least one processor, where the memory stores instructions executable by the at least one processor, and the instructions, when executed by the at least one processor, cause the at least one processor to perform the method for detecting a voice according to the first aspect.

It should be understood that contents described in this section are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

The accompanying drawings are used for better understanding of the present solution, and do not constitute a limitation to the present disclosure. In which:
Fig. 1 is a schematic flowchart of a method for detecting a voice provided according to Embodiment 1 of the present disclosure;
Fig. 2 is a schematic structural diagram of a conformer encoder provided by an embodiment of the present disclosure;
Fig. 3 is a schematic structural diagram of a confidence detection model provided by an embodiment of the present disclosure;
Fig. 4 is a schematic flowchart of a method for acquiring a first feature vector corresponding to a to-be-detected voice provided according to Embodiment 2 of the present disclosure;
Fig. 5 is a schematic diagram of a convolution extraction model provided by an embodiment of the present disclosure;
Fig. 6 is a schematic flowchart of a method for training a confidence detection model provided according to Embodiment 3 of the present disclosure;
Fig. 7 is a schematic flowchart of a method for acquiring first feature vectors corresponding to voice samples provided according to Embodiment 4 of the present disclosure;
Fig. 8 is a schematic structural diagram of an apparatus for detecting a voice provided according to Embodiment 5 of the present disclosure;
Fig. 9 is a schematic structural diagram of an apparatus for training a confidence detection model provided according to Embodiment 6 of the present disclosure; and
Fig. 10 is a schematic block diagram of an electronic device according to an embodiment of the present disclosure.

### DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Therefore, those of ordinary skills in the art should realize that various changes and modifications can be made to the embodiments described here without departing from the scope and spirit of the present disclosure. Similarly, for clearness and conciseness, descriptions of well-known functions and structures are omitted in the following description.

In the embodiments of the present disclosure, "at least one" refers to one or more, and "a plurality of" refers to two or more. "And/or", which describes an access relationship between associated objects, indicates that there may be three kinds of relationships, for example, A and/or B may represent three situations: A exists alone, A and B exist simultaneously, and B exists alone, where A and B may be singular or plural. In a textual description of the present disclosure, the character "/" generally indicates that the contextual associated objects are in an "or" relationship. In addition, in the embodiments of the present disclosure, "first", "second", "third", "fourth", "fifth", and "sixth" are only to distinguish contents of different objects, and have no other special meaning.

The technical solution provided by embodiments of the present disclosure may be applied to scenarios such as voice interaction and voice detection. At present, in most cases, if a user wants to perform human-machine interaction with an AI voice assistant, such as a smart speaker, he/she needs to wake up the smart speaker using a wake-up word, such as "Xiaodu Xanadu", and after the smart speaker is awakened, the user may perform human-machine interaction with the smart speaker, and this mode is a simplex interaction mode. It can be seen that in the simplex interaction mode, for each human-machine interaction, the user needs to wake up the smart speaker using the wake-up word, and then perform human-machine interaction with the smart speaker.

In order to make human-machine interaction dialogue more like communication between people, that is, make the human-machine interaction more natural and smoother, in a full-duplex mode, the user only needs to execute the smart speaker once using the wake-up word, and then may have a continuous conversation with the smart speaker, which may make the human-machine interaction dialogue more natural. However, since there may be many non-human-machine interaction voices, after acquiring a voice, the smart speaker needs to detect the voice. If a detection result indicates that the voice is a non-human-machine interaction voice, the smart speaker does not need to respond to the voice; if the detection result indicates that the voice is a human-machine interaction voice, the smart speaker may make an accurate response to the voice.

In the prior art, when the smart speaker performs detection on the acquired voice, it detects the voice by using an existing confidence detection model. The confidence detection model includes a transformer encoder and a classifier, a feature vector of the voice may be extracted by using a transformer network model, and the extracted feature vector is input into the classifier, then a voice detection result may be obtained by using the classifier. Here, the detection result includes a human-machine interaction voice or a non-human-machine interaction voice, or the detection result includes a confidence level of that the to-be-detected voice is a human-machine interaction voice or a confidence level of that the to-be-detected voice is a non-human-machine interaction voice. However, using the existing solution may result in poor accuracy of voice detection results.

In order to improve the accuracy of voice detection results, and considering that text may assist in voice detection to a certain extent, when performing voice detection, a matching relationship between a to-be-detected voice and a corresponding text may be fully considered. The voice detection performed jointly combining the text corresponding to the to-be-detected voice may effectively improve the accuracy of voice detection results.

Based on the above technical concept, an embodiment of the present disclosure provides a method for detecting a voice, and the method for detecting a voice provided by the embodiment of the present disclosure will be described in detail below through embodiments. It may be understood that the several embodiments below may be combined with each other, and same or similar concepts or processes may be omitted in some embodiments.

### Embodiment 1

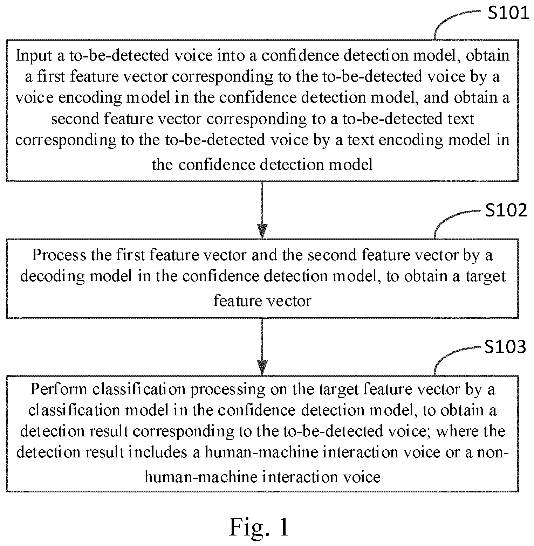

Fig. 1 is a schematic flowchart of a method for detecting a voice provided according to Embodiment 1 of the present disclosure. The method for detecting a voice may be performed by software and/or a hardware apparatus, for example, the hardware apparatus may be a terminal or a server. For example, reference may be made to Fig. 1, the method for detecting a voice may include:

S 101, inputting a to-be-detected voice into a confidence detection model, obtaining a first feature vector corresponding to the to-be-detected voice by using a voice encoding model in the confidence detection model, and obtaining a second feature vector corresponding to a to-be-detected text corresponding to the to-be-detected voice by using a text encoding model in the confidence detection model.

For example, the voice encoding model may be a transformer encoder, a conformer encoder, or other encoders having similar functions, which may be set according to actual needs. In embodiments of the present disclosure, the voice encoding model being a conformer encoder is used as an example for description, but it does not indicate that embodiments of the present disclosure are limited thereto.

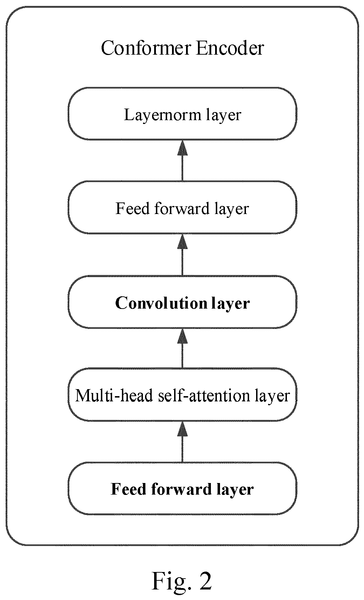

For example, referring to Fig. 2, Fig. 2 is a schematic structural diagram of a conformer encoder provided by an embodiment of the present disclosure. It can be seen that, compared with a transformer encoder, the conformer encoder additionally adds a feed forward layer before a multi-head self-attention layer and additionally adds a convolution layer after the multi-head self-attention layer, to obtain the first feature vector corresponding to the to-be-detected voice by using the conformer encoder. A last layer of the conformer encoder is a parameter normalization (layernorm) layer, which is mainly used to normalize parameters of a same layer.

It may be understood that, in an embodiment of the present disclosure, by additionally adding a feed forward layer before the multi-head self-attention layer, feature extraction performance of the conformer encoder is better; in addition, by additionally adding a convolution layer after the multi-head self-attention layer, a convolution operation corresponding to the convolution layer may be used to make up for a defect of the transformer encoder for insufficient extraction of local feature information, so that the voice encoding model may focus on effective voice features containing semantic information, which may further improve an accuracy of the extracted first feature vector.

As an example, the text encoding model may be a long short-term memory (lstm) encoder, a transformer encoder, or other text encoders having similar functions, which may be set according to actual needs. In subsequent description, the text encoding model being a transformer encoder is used as an example for description, but it does not indicate that embodiments of the present disclosure are limited thereto.

It may be understood that, before encoding a to-be-detected text by using the text encoding model, the to-be-detected text needs to be acquired first. For example, when acquiring the to-be-detected text, the confidence detection model may also include a voice recognition model, and the to-be-detected voice is recognized by using the voice recognition network model to obtain the to-be-detected text corresponding to the to-be-detected voice, then the text encoder is used to obtain the second feature vector corresponding to the to-be-detected text.

After the first feature vector corresponding to the to-be-detected voice and the second feature vector corresponding to the to-be-detected text are acquired respectively, the first feature vector and the second feature vector may be processed by using a decoding model in the confidence detection model, that is, S102 is performed as follows:

S102, processing the first feature vector and the second feature vector by using a decoding model in the confidence detection model, to obtain a target feature vector.

Here, the target feature vector may be understood as a feature vector including a relationship between the to-be-detected voice and the to-be-detected text.

As an example, the decoding model may be a transformer decoder, or other decoders having similar functions, which may be set according to actual needs. In subsequent description, the decoding model being a transformer decoder is used as an example for description, but it does not indicate that embodiments of the present disclosure are limited thereto.

In this way, after obtaining the target feature vector including the relationship between the to-be-detected voice and the to-be-detected text, a classification model in the confidence detection model may be used to perform classification processing on the target feature vector, that is, to perform S103 as follows:

S103, performing classification processing on the target feature vector by using a classification model in the confidence detection model, to obtain a detection result corresponding to the to-be-detected voice; where the detection result includes human-machine interaction voice or non-human-machine interaction voice.

As an example, the classification model may be composed of an average-pooling layer and a fully-connected layer.

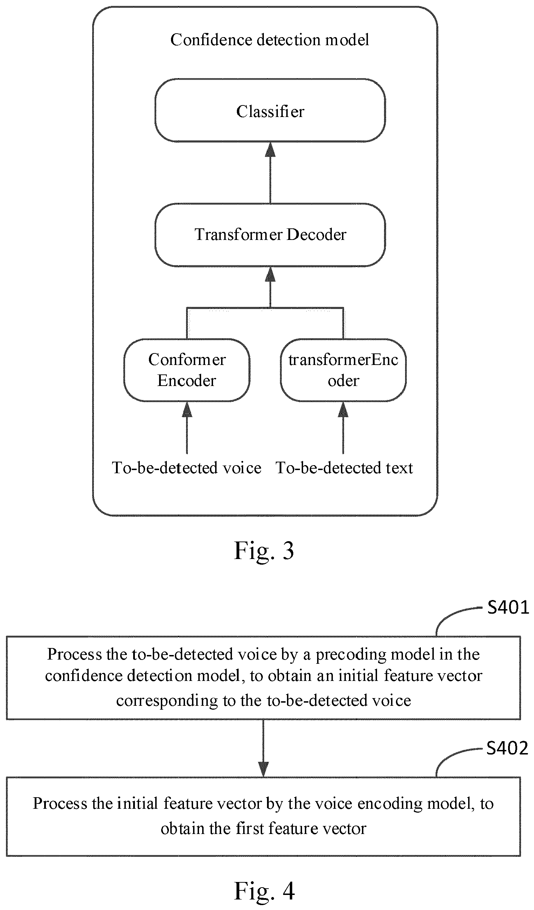

It is assumed that the encoding model is a conformer encoder, the text encoding model is a transformer encoder, the decoding model is a transformer decoder, and the classification model includes an average-pooling layer and a fully-connected layer, referring to Fig. 3, Fig. 3 is a schematic structural diagram of a confidence detection model provided by an embodiment of the present disclosure. In this way, by providing the text encoding model and the decoding model, when performing voice detection, the voice detection may be performed jointly through the target feature vector including the relationship between the to-be-detected voice and the to-be-detected text, and the accuracy of voice detection results may be effectively improved.

It can be seen that, in an embodiment of the present disclosure, when performing voice detection, obtaining the first feature vector corresponding to the to-be-detected voice by using the voice encoding model in the confidence detection model, and obtaining the second feature vector corresponding to the to-be-detected text corresponding to the to-be-detected voice by using the text encoding model in the confidence detection model; then processing the first feature vector and the second feature vector by using the decoding model in the confidence detection model, to obtain the target feature vector; and performing classification processing on the target feature vector by using the classification model in the confidence detection model. Since the target feature vector fully considers the matching relationship between the to-be-detected voice and the text thereof, the voice detection is jointly performed by combining the text corresponding to the to-be-detected voice may effectively improve the accuracy of voice detection results.

Based on the above embodiment shown in Fig. 1, considering that there may usually be other noises when acquiring the to-be-detected voice, in order to accurately locate a voice source of the to-be-detected voice and strengthen the voice source, so as to improve the accuracy of the first feature vector corresponding to the acquired to-be-detected voice, the confidence detection model also includes a precoding model. First the to-be-detected voice is processed by using the precoding model, and then the first feature vector corresponding to the to-be-detected voice is acquired by using the voice encoding model. For ease of understanding, detailed description will be made through the following embodiment shown in Fig. 4 below.

### Embodiment 2

Fig. 4 illustrates a schematic flowchart of a method for acquiring a first feature vector corresponding to a to-be-detected voice according to Embodiment 2 of the present disclosure. The method may also be performed by software and/or a hardware apparatus, for example, the hardware apparatus may be a terminal or a server. For example, reference may be made to Fig. 4, the method for acquiring a first feature vector corresponding to a to-be-detected voice may include:

S401, processing the to-be-detected voice by using a precoding model in the confidence detection model, to obtain an initial feature vector corresponding to the to-be-detected voice.

As an example, when processing the to-be-detected voice by using the precoding model, to obtain the initial feature vector corresponding to the to-be-detected voice, the to-be-detected voice may be processed first by using a feature extraction model in the precoding model, to obtain an initial first feature vector; and then feature processing may be performed on the initial first feature vector to obtain the initial feature vector; where, the feature processing includes performing frame extraction processing on the initial first feature vector by using a convolution extraction model in the precoding model, and/or, performing feature enhancement processing on the initial first feature vector by using a feature enhancement model in the precoding model.

As an example, in an embodiment of the present disclosure, when processing the to-be-detected voice by using the precoding model, three possible implementations may be included:

In a possible implementation, the precoding model may include a feature extraction model and a convolution extraction model. Based on the precoding model of this structure, when processing the to-be-detected voice, the to-be-detected voice may be processed by the feature extraction model to obtain the initial first feature vector; and then the convolution extraction model may be used to perform frame extraction processing on the initial first feature vector to obtain the initial feature vector, so that subsequently the initial feature vector may be processed by the voice encoding model to obtain the first feature vector.

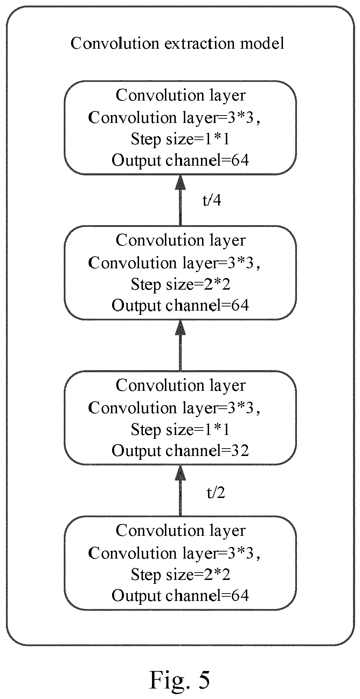

As an example, referring to Fig. 5, Fig. 5 is a schematic diagram of a convolution extraction model provided by an embodiment of the present disclosure. It can be seen that the convolution extraction model may include four convolution layers each having a 3^{∗}3 convolution kernel, and the four convolution layers each having a 3^{∗}3 convolution kernel are used to perform frame extraction processing on the initial first feature vector to obtain the initial feature vector.

It may be understood that, in an embodiment of the present disclosure, frame extraction processing is performed by the convolution extraction model, and the reason is: when the voice encoding model is a conformer encoder, since the conformer encoder adopts the self-attention mechanism, its computation amount increases exponentially with the number of frames, and the frame extraction operation may greatly reduce the computation amount of the model. Moreover, compared with a common frame skipping method, by using convolution operation with stride operation, frame extraction is performed on the to-be-detected voice and then feature vector extraction may be performed on the to-be-detected voice, which may reduce a loss caused by reduction of the number of frames.

In another possible implementation, the precoding model may include a feature extraction model and a feature enhancement model. Based on the precoding model of this structure, when processing the to-be-detected voice, the to-be-detected voice may be processed first by using the feature extraction model to obtain the initial first feature vector; and then the feature enhancement model may be used to perform feature enhancement processing on the initial first feature vector to obtain the initial feature vector, so that subsequently the initial feature vector may be processed by using the voice encoding model to obtain the first feature vector.

As an example, the feature enhancement model may be a mobile-net model.

It may be understood that, in an embodiment of the present disclosure, feature enhancement processing is performed by the feature enhancement model, and the reason is: while enhancing the capability of extracting feature vector, volume of the model is also reduced to a large extent.

In yet another possible implementation, the precoding model may include a feature extraction model, a convolution extraction model, and a feature enhancement model. Based on the precoding model of this structure, when processing the to-be-detected voice, the to-be-detected voice may be processed first by using the feature extraction model to obtain the initial first feature vector; then the convolution extraction model may be used to perform frame extraction processing on the initial first feature vector to obtain a frame extraction result; and the feature enhancement model may be used to perform feature enhancement processing on the initial first feature vector to obtain the initial feature vector, so that the initial feature vector may be subsequently processed by using the voice encoding model to obtain the first feature vector.

A structure of the convolution extraction model may refer to Fig. 5 above, here, detailed description thereof will be omitted in embodiments of the present disclosure. As an example, the feature enhancement model may be a mobile-net model.

It may be understood that, in an embodiment of the present disclosure, feature enhancement processing is performed by the feature enhancement model, and the reason is: while enhancing the capability of extracting feature vector, a model volume is also reduced to a large extent. Frame extraction processing is performed by the convolution extraction model, and the reason is: when the voice encoding model is a conformer encoder, since the conformer encoder adopts the self-attention mechanism, its computation amount increases exponentially with the number of frames, and the frame extraction operation may greatly reduce the computation amount of the model. Moreover, compared with the common frame skipping method, using convolution operation with stride operation, frame extraction is performed on the to-be-detected voice and then feature vector is extracted from the to-be-detected voice, which may reduce a loss caused by reduction of the number of frames.

In this way, the to-be-detected voice is processed by the precoding model, and after the initial feature vector corresponding to the to-be-detected voice is obtained, the initial feature vector may be input into the voice encoding model, so that the initial feature vector is processed by the voice encoding model, that is, perform S402 as follows:

S402, processing, by the voice encoding model, the initial feature vector to obtain the first feature vector.

It can be seen that, in an embodiment of the present disclosure, during acquiring the first feature vector corresponding to the to-be-detected voice, in order to accurately locate the voice source of the to-be-detected voice and strengthen the voice source, so as to improve the accuracy of the first feature vector corresponding to the acquired to-be-detected voice, the to-be-detected voice may be processed first by the precoding model in the confidence detection model to obtain the initial feature vector; then, the initial feature vector may be processed by the voice encoding model to obtain the first feature vector, which may effectively improve the accuracy of the acquired first feature vector.

Based on the embodiment shown in Fig. 1 or Fig. 4, in the above S102, during processing the first feature vector corresponding to the to-be-detected voice and the second feature vector corresponding to the to-be-detected text by using the decoding model in the confidence detection model, for example, self-attention mechanism processing may be firstly performed by the decoding model on the second feature vector to obtain a second target vector, where the second target vector is a feature vector including a relationship between words in the to-be-detected text; and then cross-attention mechanism processing may be performed by the decoding model on the first feature vector corresponding to the to-be-detected voice and the second target vector corresponding to the to-be-detected text, to obtain the target feature vector; where the target vector includes the relationship between the to-be-detected voice and the to-be-detected text. Since text may better assist voice in voice detection to a certain extent, the accuracy of voice detection results may be effectively improved by jointly performing voice detection based on the target feature vector including the relationship between the to-be-detected voice and the to-be-detected text.

After obtaining the relationship between the to-be-detected voice and the to-be-detected text, classification processing may be performed on the target feature vector based on the classification model. During performing classification processing on the target feature vector based on the classification model, for example, the classification model may include an average-pooling layer and a fully-connected layer. Assuming that the target feature vector is an M^{∗}N-dimensional feature vector, the number of M is equal to a length of the to-be-detected text, and both M and N are positive integers; where, the length of the to-be-detected text is determined based on the number of words included in the to-be-detected text. Correspondingly, in the above S103, during performing classification processing on the target feature vector by using the classification model, first, the average-pooling layer may be used to perform averaging processing on dimensions in the target feature vector respectively, to obtain a new feature vector; where, the new feature vector is a 1^{∗}N-dimensional feature vector. For example, the M^{∗}N-dimensional feature vector includes M N-dimensional vectors. For example, the performing averaging processing on dimensions in the M^{∗}N-dimensional feature vector respectively refers to that the average-pooling layer averages M pieces of values on each dimension of the N dimensions respectively. For example, assuming that a value of N is 256, the new feature vector is a 1^{∗}256-dimensional feature vector. Then, the fully-connected layer is used to perform classification processing on the new feature vector, to obtain the detection result.

It can be seen that when the detection result of the to-be-detected voice is determined by using the classification model, the classification model in the confidence detection model is used to perform classification processing on the target feature vector. Since the target feature vector fully considers the matching relationship between the to-be-detected voice and the text thereof, the voice detection is jointly performed by combining the text corresponding to the to-be-detected voice may effectively improve the accuracy of voice detection results.

It is not difficult to understand that, before the to-be-detected voice is detected by using the confidence detection model, the confidence detection model needs to be acquired first. As an example, during acquiring the confidence detection model, a deep learning method may be used to train to obtain the confidence detection model. During using the deep learning method to train to obtain the confidence detection model, considering complexity of the to-be-detected voice, the number of network parameters of the precoding model and the voice encoding model used for processing the to-be-detected voice is large. Therefore, during training the precoding model and the voice encoding model which are used for processing the to-be-detected voice, a large number of training samples at voice full-duplex are required. However, voice full-duplex is an emerging scenario where little historical training data is available, shortage of training data exists in most cases. Therefore, the training the confidence detection model may include:

First, training the network parameters of the precoding model and the voice encoding model using a large number of labeled detection data, to make a training loss of the detection task reaches a low stage, to obtain trained initial precoding model and initial voice encoding model.

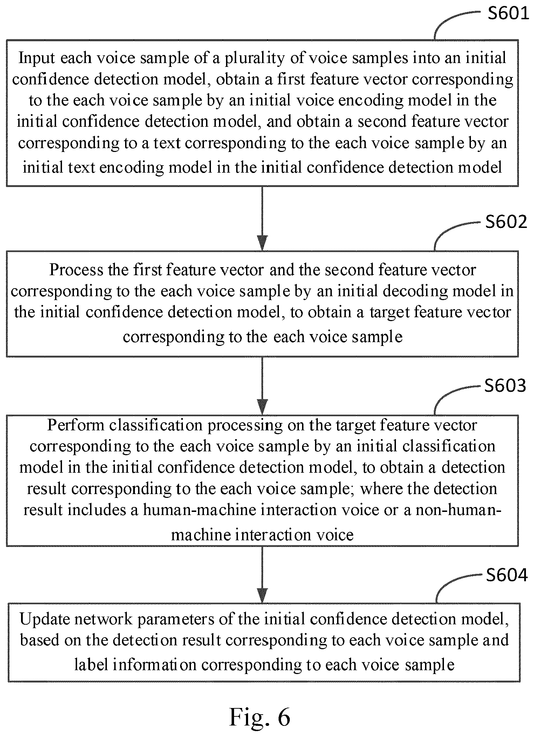

Secondly, acquiring a small number of voice samples, and training an initial confidence detection model which includes the initial precoding model, the initial voice encoding model, an initial text encoding model, a decoding model, and a classifier, to obtain the above confidence detection model. How to train the initial confidence detection model will be described in detail through Embodiment 3 shown in Fig. 6 below.

### Embodiment 3

Fig. 6 is a schematic flowchart of a method for training a confidence detection model provided according to Embodiment 3 of the present disclosure. The method may also be performed by software and/or a hardware apparatus, for example, the hardware apparatus may be a terminal or a server. For example, reference may be made to Fig. 6, the method for training a confidence detection model may include:
S601, inputting each voice sample of a plurality of voice samples into an initial confidence detection model, obtaining a first feature vector corresponding to the each voice sample by an initial voice encoding model in the initial confidence detection model, and obtaining a second feature vector corresponding to a text corresponding to the each voice sample by an initial text encoding model in the initial confidence detection model.

As an example, the initial voice encoding model may be a transformer encoder, a conformer encoder, or other encoders having similar functions, which may be set according to actual needs. In embodiments of the present disclosure, the initial voice encoding model being a conformer encoder is used as an example for description, but it does not indicate that embodiments of the present disclosure are limited thereto.

A structure of the conformer encoder may refer to Fig. 2 above. It can be seen that, compared with a transformer encoder, the conformer encoder additionally adds a feed forward layer before a multi-head self-attention layer, and additionally adds a convolution layer after the multi-head self-attention layer, to obtain the first feature vectors corresponding to the voice samples by using the conformer encoder. A last layer of the conformer encoder is a parameter normalization (layernorm) layer, which is mainly used to normalize parameters of a same layer.

It may be understood that, in an embodiment of the present disclosure, by additionally adding the feed forward layer before the multi-head self-attention layer, feature extraction performance of the conformer encoder may be better; in addition, by additionally adding the convolution layer after the multi-head self-attention layer, a convolution operation corresponding to the convolution layer may be used to make up for a defect of the transformer encoder for insufficient extraction of local feature information, so that the initial voice encoding model may focus on effective voice features containing semantic information, which may further improve an accuracy of the extracted first feature vectors.

As an example, the initial text encoding model may be a long short-term memory (lstm) encoder, a transformer encoder, or other text encoders having similar functions, which may be set according to actual needs. In subsequent description, the initial text encoding model being a transformer encoder is used as an example for description, but it does not indicate that embodiments of the present disclosure are limited thereto.

It may be understood that, before encoding the text corresponding to a voice sample by the initial text encoding model, the text need to be acquired first. As an example, during acquiring the text, the confidence detection model may also include a voice recognition model, and the voice sample is recognized by the voice recognition network model to obtain the text, then the text encoder is used to acquire the second feature vector corresponding to the text.

After the first feature vector corresponding to the each voice sample and the second feature vector corresponding to the text corresponding to the each voice sample are acquired respectively, the first feature vector and the second feature vector may be processed by an initial decoding model in the initial confidence detection model, that is, perform S602 as follows:
S602, processing, by an initial decoding model in the initial confidence detection model, the first feature vector and the second feature vector corresponding to the each voice sample, to obtain target feature vector corresponding to the each voice sample.

Here, the target feature vector corresponding to the each voice sample may be understood as a feature vector including a relationship between the voice sample and the corresponding text.

As an example, the initial decoding model may be a transformer decoder, or other decoders having similar functions, which may be set according to actual needs. In subsequent description, the initial decoding model being a transformer decoder is used as an example for description, but it does not indicate that embodiments of the present disclosure are limited thereto.

In this way, after obtaining the target feature vector including the relationship between the each voice sample and the corresponding text, an initial classification model in the initial confidence detection model may be used to perform classification processing on the target feature vector, that is, perform S603 as follows:
S603, performing, by an initial classification model in the initial confidence detection model, classification processing on the target feature vector corresponding to the each voice sample, to obtain a detection result corresponding to the each voice sample; where the detection result includes a human-machine interaction voice or a non-human-machine interaction voice.

As an example, the initial classification model may be composed of an average-pooling layer and a fully-connected layer.

In this way, the initial classification model in the initial confidence detection model is used to perform classification processing on the target feature vector. Since the target feature vector fully considers the matching relationship between the each voice sample and the corresponding text, the voice detection is jointly performed by combining the text corresponding to the voice sample, which may effectively improve the accuracy of voice detection result.

It may be understood that, with reference to the descriptions of S601-S603 above, for each voice sample, the detection result corresponding to the voice sample may be acquired using the above method.

After the detection result corresponding to each voice sample is obtained, network parameters of the initial confidence detection model may be updated based on the detection result corresponding to each voice sample and label information corresponding to each voice sample, that is, perform S604 as follows:

S604, updating network parameters of the initial confidence detection model, based on the detection result corresponding to each voice sample and label information corresponding to each voice sample.

As an example, during updating the network parameters of the initial confidence detection model based on the detection result corresponding to each voice sample and the label information corresponding to each voice sample, if the updated confidence detection model converges, the updated confidence detection model is directly determined as a final confidence detection model; if the updated confidence detection model does not converge, repeat the above S601-S604 until the updated confidence detection model converges, and the updated confidence detection model is directly determined as the final confidence detection model, thereby acquiring the confidence detection model.

It can be seen that, in an embodiment of the present disclosure, when training to obtain the confidence detection model, the first feature vector corresponding to each voice sample is obtained by the initial voice encoding model in the initial confidence detection model, and the second feature vector corresponding to the text corresponding to the each voice sample is obtained by the initial text encoding model in the initial confidence detection model; then the first feature vector and the second feature vector are processed by the initial decoding model in the initial confidence detection model to obtain the target feature vector; classification processing is performed on the target feature vector by using the initial classification model in the initial confidence detection model. Since the target feature vector fully considers the matching relationship between the each voice sample and the corresponding text, the voice detection is jointly performed by combining the texts corresponding to the each voice sample, which may effectively improve the accuracy of voice detection result; and updating the network parameters of the initial confidence detection model based on the detection result corresponding to each voice sample and the label information corresponding to each voice sample, which realizes the training of the confidence detection model, and improves an accuracy of the confidence detection model obtained by training.

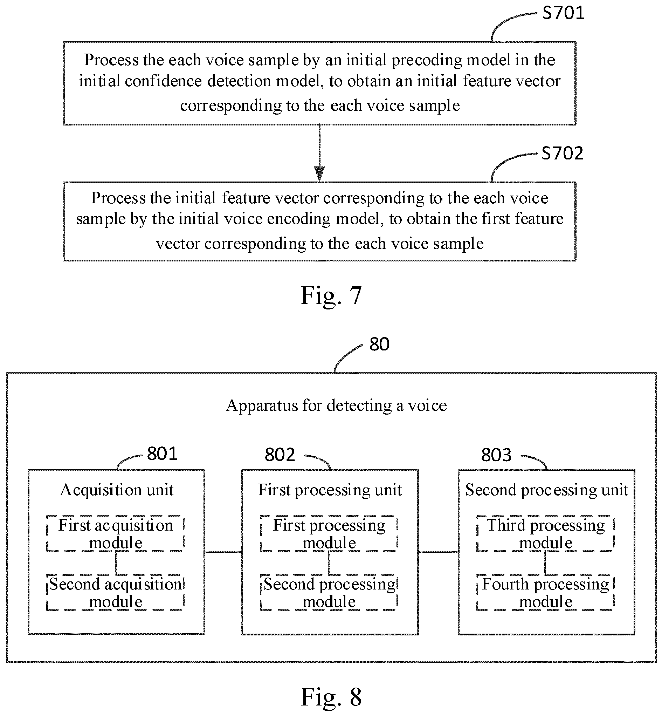

Based on the embodiment shown in Fig. 6 above, considering that there may usually be other noises when acquiring the voice samples, in order to accurately locate voice sources of the voice samples and strengthen the voice sources, so as to improve the accuracy of the first feature vectors corresponding to the acquired voice samples, the initial confidence detection model may also include an initial precoding model, and the initial precoding model is used to process the voice samples first, then the first feature vectors corresponding to the voice samples are acquired by the initial voice encoding model. For ease of understanding, detailed description will be made through the following embodiment shown in Fig. 7 below.

### Embodiment 4

Fig. 7 is a schematic flowchart of a method for acquiring first feature vector corresponding to each voice sample provided according to Embodiment 4 of the present disclosure. The method may also be performed by software and/or a hardware apparatus, for example, the hardware apparatus may be a terminal or a server. For example, reference may be made to Fig. 4, the method for acquiring first feature vectors corresponding to voice samples may include:
S701, processing each voice sample by an initial precoding model in the initial confidence detection model, to obtain initial feature vector corresponding to the each voice sample.

As an example, during processing each voice sample by the initial precoding model in the initial confidence detection model, each voice sample may be processed first by an initial feature extraction model in the initial precoding model, to obtain initial first feature vector corresponding to each voice sample; and then feature processing may be performed on the initial first feature vector corresponding to the each voice sample to obtain the initial feature vector corresponding to the each voice sample; where, the feature processing includes performing frame extraction processing on the initial first feature vector corresponding to the each voice sample by an initial convolution extraction model in the initial precoding model, and/or, performing feature enhancement processing on the initial first feature vector corresponding to each voice sample by using an initial feature enhancement model in the initial precoding model.

As an example, in an embodiment of the present disclosure, during processing each voice sample by the initial precoding model, three possible implementations may be included:
In a possible implementation, the initial precoding model may include an initial feature extraction model and an initial convolution extraction model. Based on the initial precoding model of this structure, when processing each voice sample, each voice sample may be processed by the initial feature extraction model to obtain the initial first feature vector; and then the initial convolution extraction model may be used to perform frame extraction processing on the initial first feature vector to obtain the initial feature vector, so that subsequently the initial feature vector may be processed by the initial voice encoding model to obtain the first feature vector.

As an example, the initial convolution extraction model may refer to Fig. 5 above. The initial convolution extraction model may include four convolution layers each having a 3^{∗}3 convolution kernel, and the four convolution layers each having a 3^{∗}3 convolution kernel are used to perform frame extraction processing on the initial first feature vectors to obtain the initial feature vectors.

It may be understood that, in an embodiment of the present disclosure, frame extraction processing is performed by the initial convolution extraction model, and the reason is: when the initial voice encoding model is a conformer encoder, since the conformer encoder adopts the self-attention mechanism, its computation amount increases exponentially with the number of frames, and the frame extraction operation may greatly reduce the computation amount of the model. Moreover, compared with a common frame skipping method, by using convolution operation with stride operation, frame extraction is performed on the to-be-detected voice and then feature vector extraction may be performed on the to-be-detected voice, which may reduce a loss caused by reduction of the number of frames.

In another possible implementation, the initial precoding model may include an initial feature extraction model and an initial feature enhancement model. Based on the initial precoding model of this structure, when processing each voice sample, each voice sample may be processed first by using the initial feature extraction model to obtain the initial first feature vector; and then the initial feature enhancement model may be used to perform feature enhancement processing on the initial first feature vector to obtain the initial feature vector, so that subsequently the initial feature vector may be processed by using the initial voice encoding model to obtain the first feature vector.

As an example, the initial feature enhancement model may be a mobile-net model.

It may be understood that, in an embodiment of the present disclosure, feature enhancement processing is performed by the initial feature enhancement model, and the reason is: while enhancing the capability of extracting feature vector, volume of the model is also reduced to a large extent.

In yet another possible implementation, the initial precoding model may include an initial feature extraction model, an initial convolution extraction model, and an initial feature enhancement model. Based on the initial precoding model of this structure, when processing each voice sample, each voice sample may be processed first by the initial feature extraction model to obtain the initial first feature vector; then the initial convolution extraction model may be used to perform frame extraction processing on the initial first feature vector to obtain frame extraction result; and the initial feature enhancement model may be used to perform feature enhancement processing on the initial first feature vector to obtain the initial feature vector, so that the initial feature vector may be subsequently processed by using the initial voice encoding model to obtain the first feature vector.

A structure of the initial convolution extraction model may refer to Fig. 5 above, here, detailed description thereof will be omitted in the embodiments of the present disclosure. For example, the initial feature enhancement model may be a mobile-net model.

It may be understood that, in an embodiment of the present disclosure, feature enhancement processing is performed by the initial feature enhancement model, and the reason is: while enhancing the capability of extracting feature vector, a model volume is also reduced to a large extent. Frame extraction processing is performed by the initial convolution extraction model, and the reason is: when the voice encoding model is a conformer encoder, since the conformer encoder adopts the self-attention mechanism, its computation amount increases exponentially with the number of frames, and the frame extraction operation may greatly reduce the computation amount of the model. Moreover, compared with the common frame skipping method, using convolution operation with stride operation, frame extraction is performed on the to-be-detected voice and then feature vector is extracted from the voice samples, which may reduce a loss caused by reduction of the number of frames.

In this way, each voice sample is processed by using the initial precoding model, and after the initial feature vector corresponding to each voice sample is acquired, the initial feature vector may be input into the initial voice encoding model, so that the initial feature vector is processed by using the initial voice encoding model, that is, perform S702 as follows:
S702, processing, by the initial voice encoding model, the initial feature vector corresponding to each voice sample, to obtain the first feature vector corresponding to each voice sample.

It can be seen that, in an embodiment of the present disclosure, during acquiring the first feature vector corresponding to each voice sample, in order to accurately locate the voice source of the voice sample and strengthen the voice source, so as to improve the accuracy of the first feature vector corresponding to the acquired voice sample, the voice sample may be processed first by the initial precoding model in the initial confidence detection model, to obtain the initial feature vector; then, the initial feature vector may be processed by the initial voice encoding model to obtain the first feature vector, which may effectively improve the accuracy of the acquired first feature vectors.

Based on the embodiment shown in Fig. 6 or Fig. 7, in the above S602, during processing the first feature vector and the second feature vector corresponding to each voice sample by the initial decoding model in the initial confidence detection model, for example, self-attention mechanism processing may be firstly performed by the initial decoding model on the second feature vector to obtain second target vector corresponding to each voice sample, and then cross-attention mechanism processing may be performed by the decoding model on the first feature vector and the second target vector corresponding to the each voice sample, to obtain the target feature vector corresponding to each voice sample; where the target vector include the relationship between each voice sample and the corresponding text. Since text may better assist voice in voice detection to a certain extent, the accuracy of voice detection result may be effectively improved by jointly performing voice detection based on the target feature vector including the relationship between the voice sample and the corresponding text.

After obtaining the relationship between each voice sample and the corresponding text, classification processing may be performed on the target feature vector based on the initial classification model. During performing classification processing on the target feature vector based on the initial classification model, for example, the initial classification model may include an average-pooling layer and a fully-connected layer. Assuming that a target feature vector is M^{∗}N-dimensional feature vector, a value of M is equal to the length of a text corresponding to the voice sample, where, the length of a text is determined based on the number of words included in the text. Correspondingly, in the above S603, when performing classification processing on the target feature vector by the initial classification model, first, the average-pooling layer may be used to perform averaging processing on dimensions in the target feature vector respectively, to obtain a new feature vector; where, the new feature vector is 1^{∗}N-dimensional feature vector. For example, assuming that a value of N is 256, the new feature vector is 1^{∗}256-dimensional feature vector. Then, the fully-connected layer is used to perform classification processing on the new feature vector, to obtain the detection result.

It can be seen that when the detection result of each voice sample is determined by using the initial classification model, the initial classification model in the initial confidence detection model is used to perform classification processing on the target feature vector. Since the target feature vector fully considers the matching relationship between each voice sample and the corresponding text, the voice detection is jointly performed by combining the text corresponding to the voice sample, which may effectively improve the accuracy of voice detection results.

After the detection result corresponding to each voice sample is acquired, network parameters of the initial confidence detection model may be updated based on the detection result corresponding to each voice sample and label information corresponding to each voice sample. For example, when updating the network parameters of the initial confidence detection model based on the detection result corresponding to each voice sample and the label information corresponding to each voice sample, first, a loss function corresponding to each voice sample may be constructed based on the detection result and the label information corresponding to each voice sample; and the network parameters of the initial confidence detection model may be updated based on the loss function corresponding to each voice sample, so as to realize the training of the confidence detection model.

Under normal circumstances, during the training of the confidence detection model, a plurality of voice samples for performing one cycle of the training are a group of samples in total training samples. When one cycle of the training is performed, an average loss function corresponding to the plurality of voice samples may be determined first based on the loss function corresponding to each voice sample; and the network parameters of the initial confidence detection model may be updated based on the average loss function, so as to realize the cycle of the training of the confidence detection model.

### Embodiment 5

Fig. 8 is a schematic structural diagram of an apparatus for detecting a voice provided according to Embodiment 5 of the present disclosure. As an example, referring to Fig. 8, the apparatus for detecting a voice may include:
an acquisition unit, configured to input a to-be-detected voice into a confidence detection model, obtain a first feature vector corresponding to the to-be-detected voice by a voice encoding model in the confidence detection model, and obtain a second feature vector corresponding to a to-be-detected text corresponding to the to-be-detected voice by a text encoding model in the confidence detection model;
a first processing unit, configured to process, by a decoding model in the confidence detection model, the first feature vector and the second feature vector to obtain a target feature vector; and
a second processing unit, configured to perform, by a classification model in the confidence detection model, classification processing on the target feature vector to obtain a detection result corresponding to the to-be-detected voice; wherein the detection result comprises human-machine interaction voice or non-human-machine interaction voice.

Alternatively, the first processing unit includes a first processing module and a second processing module.

The first processing module is configured to perform self-attention mechanism processing on the second feature vector, to obtain a second target vector.

The second processing module is configured to perform cross-attention mechanism processing on the first feature vector and the second target vector, to obtain the target feature vector.

Alternatively, the target feature vector is an M^{∗}N-dimensional feature vector, the value of M is equal to a length of the to-be-detected text, and both M and N are positive integers; the second processing unit includes a third processing module and a fourth processing module.

The third processing module is configured to perform averaging processing on dimensions in the target feature vector respectively, to obtain a new feature vector; wherein, the new feature vector is a 1^{∗}N-dimensional feature vector.

The fourth processing module is configured to perform classification processing on the new feature vector, to obtain the detection result.

Alternatively, the acquisition unit includes a first acquisition module and a second acquisition module.

The first acquisition module is configured to process, by a precoding model in the confidence detection model, the to-be-detected voice to obtain an initial feature vector corresponding to the to-be-detected voice.

The second acquisition module is configured to process, by the voice encoding model, the initial feature vector to obtain the first feature vector.

Alternatively, the first acquisition module includes a first acquisition submodule and a second acquisition submodule.

The first acquisition submodule is configured to process, by a feature extraction model in the precoding model, the to-be-detected voice to obtain an initial first feature vector.

The second acquisition submodule is configured to perform feature processing on the initial first feature vector to obtain the initial feature vector; wherein, the feature processing comprises performing frame extraction processing on the initial first feature vector by a convolution extraction model in the precoding model, and/or, performing feature enhancement processing on the initial first feature vector by a feature enhancement model in the precoding model.

The apparatus for detecting a voice provided by the above embodiment of the present disclosure may implement the technical solution of the method for detecting a voice shown in any of the above embodiments, an implementation principle and beneficial effects of the apparatus are similar to those of the method for detecting a voice, and reference may be made to the implementation principle and beneficial effects of the method for detecting a voice, detailed description thereof will be omitted.

### Embodiment 6

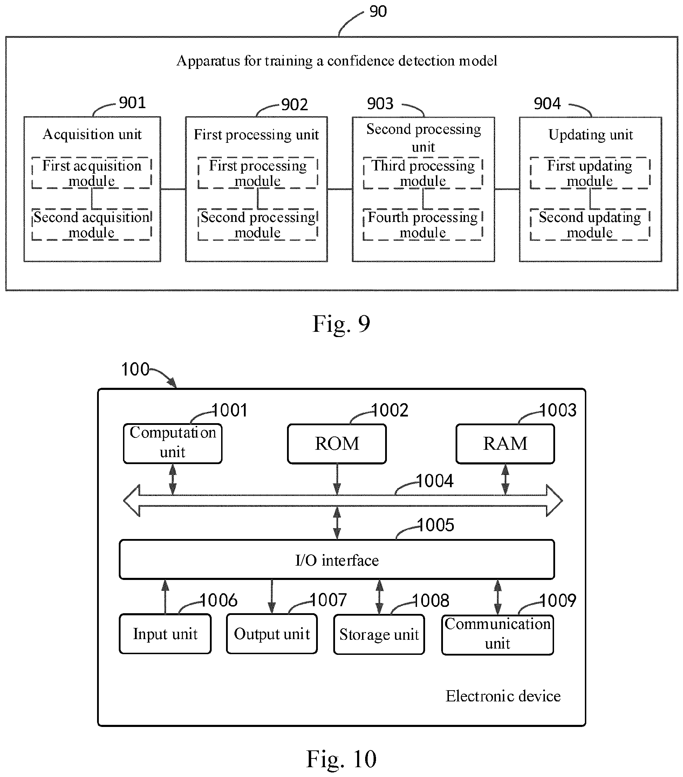

Fig. 9 is a schematic structural diagram of an apparatus for training a confidence detection model provided according to Embodiment 6 of the present disclosure. For example, referring to Fig. 9, the apparatus for training a confidence detection model may include:
an acquisition unit, configured to input each voice sample of a plurality of voice samples into an initial confidence detection model, obtain a first feature vector corresponding to each voice sample by an initial voice encoding model in the initial confidence detection model, and obtain a second feature vector corresponding to a text corresponding to each voice sample by an initial text encoding model in the initial confidence detection model;
a first processing unit, configured to process, by an initial decoding model in the initial confidence detection model, the first feature vector and the second feature vector corresponding to each voice sample to obtain target feature vector corresponding to each voice sample;
a second processing unit, configured to perform, by an initial classification model in the initial confidence detection model, classification processing on the target feature vectors corresponding to each voice sample to obtain a detection result corresponding to each voice sample; wherein the detection result comprises a human-machine interaction voice or a non-human-machine interaction voice; and
an updating unit, configured to update network parameters of the initial confidence detection model, based on the detection result corresponding to each voice sample and label information corresponding to the each voice sample.

Alternatively, the first processing unit includes a first processing module and a second processing module.

The first processing module is configured to perform self-attention mechanism processing on the second feature vector corresponding to each voice sample, to obtain a second target vector corresponding to each voice sample.

The second processing module is configured to perform cross-attention mechanism processing on the first feature vector and the second target vector corresponding to each voice sample, to obtain the target feature vector corresponding to each voice sample.

Alternatively, the target feature vector is an M^{∗}N-dimensional feature vector, the value of M is equal to a length of the texts, and both M and N are positive integers; the second processing unit includes a third processing module and a fourth processing module.

The third processing module is configured to perform averaging processing on dimensions in the target feature vector corresponding to each voice sample respectively, to obtain a new feature vector corresponding to each voice sample; where, the new feature vector is 1^{∗}N-dimensional feature vector.

The fourth processing module is configured to perform classification processing on the new feature vector corresponding to each voice sample, to obtain the detection result corresponding to each voice sample.

Alternatively, the acquisition unit includes a first acquisition module and a second acquisition module.

The first acquisition module is configured to process, by an initial precoding model in the initial confidence detection model, the voice sample to obtain initial feature vector corresponding to each voice sample.

The second acquisition module is configured to process, by the initial voice encoding model, the initial feature vector corresponding to each voice sample to obtain the first feature vector corresponding to each voice sample.

Alternatively, the first acquisition module includes a first acquisition submodule and a second acquisition submodule.

The first acquisition submodule is configured to process, by an initial feature extraction model in the initial precoding model, each voice sample to obtain an initial first feature vector corresponding to each voice sample.

The second acquisition submodule is configured to perform feature processing on the initial first feature vector corresponding to each voice sample to obtain the initial feature vector corresponding to each voice sample; wherein, the feature processing comprises performing frame extraction processing on the initial first feature vector corresponding to each voice sample by using an initial convolution extraction model in the initial precoding model, and/or, performing feature enhancement processing on the initial first feature vector corresponding to each voice sample by using an initial feature enhancement model in the initial precoding model.

Alternatively, the updating unit includes a first updating module and a second updating module.

The first updating module is configured to construct a loss function corresponding to the each voice sample, based on the detection result and the label information corresponding to the each voice sample.

The second updating module is configured to update the network parameters of the initial confidence detection model based on the loss function corresponding to the each voice sample.

The apparatus for training a confidence detection model provided by the above embodiment of the present disclosure may implement the technical solution of the method for training a confidence detection model shown in any of the above embodiments, an implementation principle and beneficial effects of the apparatus are similar to those of the method for training a confidence detection model, and reference may be made to the implementation principle and beneficial effects of the method for training a confidence detection model, detailed description thereof will be omitted.

According to embodiments of the present disclosure, provides an electronic device, a readable storage medium, and a computer program product are also provided.

According to an embodiment of the present disclosure, a computer program product is provided, and the computer program product includes: a computer program, the computer program is stored in a readable storage medium, at least one processor of an electronic device may read the computer program from the readable storage medium, and the at least one processor executes the computer program to cause the electronic device to implement the solution provided by any of the above embodiments.

Fig. 10 is a schematic block diagram of an electronic device 100 according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 10, the device 100 includes a computation unit 1001, which may perform various appropriate actions and processing, based on a computer program stored in a read-only memory (ROM) 1002 or a computer program loaded from a storage unit 1008 into a random access memory (RAM) 1003. In the RAM 1003, various programs and data required for the operation of the device 100 may also be stored. The computation unit 1001, the ROM 1002, and the RAM 1003 are connected to each other through a bus 1004. An input/output (I/O) interface 1005 is also connected to the bus 1004.

A plurality of parts in the device 100 are connected to the I/O interface 1005, including: an input unit 1006, for example, a keyboard and a mouse; an output unit 1007, for example, various types of displays and speakers; the storage unit 1008, for example, a disk and an optical disk; and a communication unit 1009, for example, a network card, a modem, or a wireless communication transceiver. The communication unit 1009 allows the device 1000 to exchange information/data with other devices over a computer network such as the Internet and/or various telecommunication networks.

The computation unit 1001 may be various general-purpose and/or dedicated processing components having processing and computing capabilities. Some examples of the computation unit 1001 include, but are not limited to, central processing unit (CPU), graphics processing unit (GPU), various dedicated artificial intelligence (AI) computing chips, various computation units running machine learning model algorithms, digital signal processors (DSP), and any appropriate processors, controllers, microcontrollers, etc. The computation unit 1001 performs the various methods and processes described above, such as a method for detecting a voice or a method for training a confidence detection model. For example, in some embodiments, the method for detecting a voice or the method for training a confidence detection model may be implemented as a computer software program, which is tangibly included in a machine readable medium, such as the storage unit 1008. In some embodiments, part or all of the computer program may be loaded and/or installed on the device 100 via the ROM 1002 and/or the communication unit 1009. When the computer program is loaded into the RAM 1003 and executed by the computation unit 1001, one or more steps of the method for detecting a voice or the method for training a confidence detection model described above may be performed. Alternatively, in other embodiments, the computation unit 1001 may be configured to perform the method for detecting a voice or the method for training a confidence detection model by any other appropriate means (for example, by means of firmware).

Various embodiments of the systems and technologies described above herein may be implemented in digital electronic circuit systems, integrated circuit systems, field programmable gate arrays (FPGA), application specific integrated circuits (ASIC), application specific standard products (ASSP), system on chip (SOC), load programmable logic devices (CPLD), computer hardware, firmware, software, and/or combinations thereof. These various embodiments may be implemented in one or more computer programs that may be executed and/or interpreted on a programmable system including at least one programmable processor, which may be a dedicated or general programmable processor that may receive data and instructions from a storage system, at least one input device, and at least one output device, and transmit data and instructions to the storage system, the at least one input device, and the at least one output device.

The program code for implementing the methods of the present disclosure may be written in any combination of one or more programming languages. These program codes can be provided to the processor or controller of general computer, dedicated computer or other programmable data processing device, so that when executed by the processor or controller, the program code enables the functions / operations specified in the flow chart and/or block diagram to be implemented. The program code can be executed completely on the machine, partially on the machine, partially on the machine and partially on the remote machine as a separate software package, or completely on the remote machine or server.

In the context of the present disclosure, a machine readable medium may be a tangible medium which may contain or store a program for use by, or used in combination with, an instruction execution system, apparatus or device. The machine readable medium may be a machine readable signal medium or a machine readable storage medium. The computer readable medium may include, but is not limited to, electronic, magnetic, optical, electromagnetic, infrared, or semiconductor systems, apparatuses, or devices, or any appropriate combination of the above. A more specific example of the machine readable storage medium will include an electrical connection based on one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any appropriate combination of the above.

To provide interaction with a user, the systems and technologies described herein may be implemented on a computer that is provided with: a display apparatus (e.g., a CRT (cathode ray tube) or an LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or tactile feedback); and an input may be received from the user in any form (including an acoustic input, a voice input, or a tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an implementation of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and generally interact with each other through a communication network. The relationship between the client and the server is generated by virtue of computer programs that run on corresponding computers and have a client-server relationship with each other. The server may be a cloud server, also known as cloud computing server or virtual machine, which is a host product in the cloud computing service system to solve the defects of traditional physical host and VPS service ("virtual private server", or "VPS") that are difficult to manage and weak in business scalability. The server may also be a distributed system server or a blockchain server.

It should be understood that the various forms of processes shown above may be used to reorder, add, or delete steps. For example, the steps disclosed in embodiments of the present disclosure may be executed in parallel, sequentially, or in different orders, as long as the desired results of the technical solutions mentioned in embodiments of the present disclosure can be implemented. This is not limited herein.

The above specific implementations do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the principle of the present disclosure should be encompassed within the scope of protection of the present disclosure.

## Claims

1. A method for detecting a voice, the method comprising:
inputting a to-be-detected voice into a confidence detection model, obtaining a first feature vector corresponding to the to-be-detected voice by a voice encoding model in the confidence detection model, and obtaining a second feature vector corresponding to a to-be-detected text corresponding to the to-be-detected voice by a text encoding model in the confidence detection model;
processing, by a decoding model in the confidence detection model, the first feature vector and the second feature vector to obtain a target feature vector; and
performing, by a classification model in the confidence detection model, classification processing on the target feature vector to obtain a detection result corresponding to the to-be-detected voice; wherein the detection result comprises human-machine interaction voice or non-human-machine interaction voice.

2. The method according to claim 1, wherein the processing the first feature vector and the second feature vector to obtain the target feature vector, comprises:
performing self-attention mechanism processing on the second feature vector, to obtain a second target vector; and
performing cross-attention mechanism processing on the first feature vector and the second target vector, to obtain the target feature vector.

3. The method according to claim 1 or 2, wherein the target feature vector is an M^{∗}N-dimensional feature vector, a value of M is equal to a length of the to-be-detected text, and both M and N are positive integers;
the performing classification processing on the target feature vector to obtain the detection result corresponding to the to-be-detected voice, comprises:
performing averaging processing on dimensions in the target feature vector respectively, to obtain a new feature vector; wherein, the new feature vector is a 1^{∗}N-dimensional feature vector; and
performing classification processing on the new feature vector, to obtain the detection result.

4. The method according to any one of claims 1-3, wherein the obtaining the first feature vector corresponding to the to-be-detected voice by the voice encoding model in the confidence detection model, comprises:
processing, by a precoding model in the confidence detection model, the to-be-detected voice to obtain an initial feature vector corresponding to the to-be-detected voice; and
processing, by the voice encoding model, the initial feature vector to obtain the first feature vector.

5. The method according to claim 4, wherein the processing, by the precoding model in the confidence detection model, the to-be-detected voice to obtain the initial feature vector corresponding to the to-be-detected voice, comprises:
processing, by a feature extraction model in the precoding model, the to-be-detected voice to obtain an initial first feature vector; and
performing feature processing on the initial first feature vector to obtain the initial feature vector; wherein, the feature processing comprises performing frame extraction processing on the initial first feature vector by a convolution extraction model in the precoding model, and/or, performing feature enhancement processing on the initial first feature vector by a feature enhancement model in the precoding model.

6. A method for training a confidence detection model, comprising:
inputting each voice sample of a plurality of voice samples into an initial confidence detection model, obtaining a first feature vector corresponding to the each voice sample by an initial voice encoding model in the initial confidence detection model, and obtaining a second feature vector corresponding to a text corresponding to the each voice sample by an initial text encoding model in the initial confidence detection model;
processing, by an initial decoding model in the initial confidence detection model, the first feature vector and the second feature vector corresponding to the each voice sample to obtain target feature vector corresponding to the each voice sample;
performing, by an initial classification model in the initial confidence detection model, classification processing on the target feature vector corresponding to the each voice sample to obtain a detection result corresponding to the each voice sample; wherein the detection result comprises a human-machine interaction voice or a non-human-machine interaction voice; and
updating network parameters of the initial confidence detection model, based on the detection result corresponding to the each voice sample and label information corresponding to the each voice sample.

7. The method according to claim 6, wherein the processing the first feature vector and the second feature vector corresponding to the each voice sample, to obtain the target feature vector corresponding to the each voice sample, comprises:
performing self-attention mechanism processing on the second feature vector corresponding to the each voice sample, to obtain a second target vector corresponding to the each voice sample; and
performing cross-attention mechanism processing on the first feature vector and the second target vector corresponding to the each voice sample, to obtain the target feature vector corresponding to the each voice sample.

8. The method according to claim 6 or 7, wherein a target feature vector corresponding to the each voice sample is an M^{∗}N-dimensional feature vector, a value of M is equal to a length of the text corresponding to the voice sample, and both M and N are positive integers;
the performing classification processing on the target feature vector corresponding to the each voice sample, to obtain the detection result corresponding to the each voice sample, comprises:
performing averaging processing on dimensions in the target feature vector corresponding to the each voice sample respectively, to obtain a new feature vector corresponding to the each voice sample; wherein, the new feature vector is 1^{∗}N-dimensional feature vector; and
performing classification processing on the new feature vector corresponding to the each voice sample, to obtain the detection result corresponding to the each voice sample.

9. The method according to any one of claims 6-8, wherein the obtaining the first feature vector corresponding to the each voice sample by the initial voice encoding model in the initial confidence detection model, comprises:
processing, by an initial precoding model in the initial confidence detection model, the each voice sample to obtain an initial feature vector corresponding to the each voice sample; and
processing, by the initial voice encoding model, the initial feature vector corresponding to the each voice sample to obtain the first feature vector corresponding to the each voice sample.

10. The method according to claim 9, wherein the processing, by the initial precoding model in the initial confidence detection model, the voice sample to obtain the initial feature vector corresponding to the each voice sample, comprises:
processing, by an initial feature extraction model in the initial precoding model, the voice sample to obtain an initial first feature vector corresponding to the each voice sample; and
performing feature processing on the initial first feature vector corresponding to the each voice sample to obtain the initial feature vector corresponding to the each voice sample; wherein, the feature processing comprises performing frame extraction processing on the initial first feature vector corresponding to the each voice sample by using an initial convolution extraction model in the initial precoding model, and/or, performing feature enhancement processing on the initial first feature vector corresponding to the each voice sample by using an initial feature enhancement model in the initial precoding model.

11. The method according to any one of claims 6-10, wherein the updating the network parameters of the initial confidence detection model based on the detection result corresponding to the each voice sample and label information corresponding to the each voice sample, comprises:
constructing a loss function corresponding to the each voice sample, based on the detection result and the label information corresponding to the each voice sample; and
updating the network parameters of the initial confidence detection model based on the loss function corresponding to the each voice sample.

12. An apparatus for detecting a voice, the apparatus comprising means for carrying out the method for detecting a voice according to any one of claims 1-5 or the method for training a confidence detection model according to any one of claims 6-11.

13. A non-transitory computer readable storage medium storing computer instructions, wherein, the computer instructions, when executed by a computer, cause the computer to perform the method for detecting a voice according to any one of claims 1-5; or, perform the method for training a confidence detection model according to any one of claims 6-11.

14. A computer program product, comprising a computer program, the computer program, when executed by a processor, causes the processor to implement the method for detecting a voice according to any one of claims 1-5; or, implement the method for training a confidence detection model according to any one of claims 6-11.

15. A smart speaker, comprising:
at least one processor; and
a memory communicatively connected to the at least one processor; wherein,
the memory stores instructions executable by the at least one processor, and the instructions, when executed by the at least one processor, cause the at least one processor to perform the method for detecting a voice according to any one of claims 1-5.
